# EUROPEAN PATENT APPLICATION

(11) **EP 4 528 857 A1**
(43) Date of publication of application: **26.03.2025**
(21) Application number: 23914554.3
(22) Date of filing: 26.12.2023
(51) Int. Cl.: H01M 4/62, H01M 4/38, H01M 4/134, H01M 10/0525

(54) **NEGATIVE ELECTRODE ACTIVE MATERIAL AND PREPARATION METHOD THEREFOR, NEGATIVE ELECTRODE SHEET, SECONDARY BATTERY, AND ELECTRIC DEVICE**

(30) Priority: 03.01.2023 CN 202310009655
(71) Applicant: Contemporary Amperex Technology (Hong Kong) Limited, Hong Kong (HK)
(72) Inventor: YUN, Liang, Ningde, Fujian 352100 (CN); SUN, Xin, Ningde, Fujian 352100 (CN); WU, Lili, Ningde, Fujian 352100 (CN); LI, Xuan, Ningde, Fujian 352100 (CN); DONG, Miaomiao, Ningde, Fujian 352100 (CN); SONG, Peidong, Ningde, Fujian 352100 (CN); CHEN, Xingbu, Ningde, Fujian 352100 (CN)
(74) Representative: Kraus & Lederer PartGmbB
(86) International application number: PCT/CN2023/142065
(87) International publication number: WO 2024/146422

(57) **Abstract**

This application discloses a negative active material and a preparation method thereof, a negative electrode plate, a secondary battery, and an electrical device, and relates to the battery field. The negative active material includes: porous carbon, where a surface of the porous carbon is provided with pore channels communicating to an interior of the porous carbon; and, a deposit, settling in the pore channels and including a silicon layer and a functional layer deposited in sequence from an interior of the pore channels outward, where the functional layer is made of a material that includes at least one of carbon, phosphorus, tin, or germanium. With the functional layer disposed, and with silicon disposed in the pore channels of the porous carbon, the negative active material disclosed herein reserves space for expansion of silicon, thereby lifting the lithium plating window, and improving the kinetics of the battery.

## Description

### CROSS-REFERENCE TO RELATED APPLICATIONS

This application claims priority to Chinese Patent Application No. 202310009655.4, filed with China National Intellectual Property Administration on January 3, 2023 and entitled "NEGATIVE ACTIVE MATERIAL AND PREPARATION METHOD THEREOF, NEGATIVE ELECTRODE PLATE, SECONDARY BATTERY, AND ELECTRICAL DEVICE", which is incorporated herein by reference in its entirety.

### TECHNICAL FIELD

This application relates to the field of battery technology, and in particular, to a negative active material and a preparation method thereof, a negative electrode plate, a secondary battery, and an electrical device.

### BACKGROUND

A silicon-carbon composite material is a recently popular type of negative active material. Silicon offers the advantages such as an ultra-high theoretical lithiation capacity that is approximately ten times that of a carbon material, a charge-discharge plateau similar to that of graphite, low cost, and abundant source. However, in the silicon-carbon composite material, a pure hard carbon skeleton is difficult to compact. The compaction density of pure hard carbon is as low as 1.2 g/CC, thereby limiting the increase of the volumetric energy density of batteries. In addition, deposited silicon in the material does not fill interstices, thereby resulting in low electronic conductivity. Carbon pores in the material lead to relatively low C-rate performance of the material, and impair the kinetic performance of the batteries.

### SUMMARY

A main objective of this application is to disclose a negative active material and a preparation method thereof, a negative electrode plate, a secondary battery, and an electrical device to improve the kinetic performance of the battery.

According to a first aspect, this application provides a negative active material. The negative active material includes: porous carbon, where a surface of the porous carbon is provided with pore channels communicating to an interior of the porous carbon; and, a deposit, settling in the pore channels and including a silicon layer and a functional layer deposited in sequence from an interior of the pore channels outward, where the functional layer is made of a material that includes at least one of carbon, phosphorus, tin, or germanium.

In the technical solution of this embodiment of this application, silicon is disposed in the pore channels of the porous carbon, and a functional layer is disposed to overlay the silicon. The carbon, phosphorus, tin, and germanium can greatly improve the transfer kinetics of lithium ions. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, accelerates diffusion of lithium ions, increases the solid-phase diffusion speed, and enhances the kinetics. With the functional layer disposed, and with silicon disposed in the pore channels of the porous carbon, the negative active material disclosed herein reserves space for expansion of silicon, thereby lifting the lithium plating window, and improving the kinetics of the battery.

In some embodiments, a specific surface area of the porous carbon is 1000 to 2000 m²/g; and/or, a pore diameter of the pore channels is 2 to 500 nm; and/or, a particle diameter of the porous carbon is 2 to 8 µm; and/or, a volume of the deposit is 30% to 70% of a volume of the pore channels. In this way, with the porous carbon used as a skeleton, space is reserved for silicon to expand. With the parameter values falling within the above ranges, the diffusion energy barrier of lithium ions is reduced, the kinetics are improved, the lithium plating potential is raised, the lithium plating window is lifted, and the kinetic performance is improved.

In some embodiments, a mass percent of silicon in the negative active material is 40% to 100%. In this way, a high silicon content can be applied to battery products of 400 to 500 Wh/kg to alleviate the problem of low kinetics of high-silicon products, improve the power performance of the electrode, and endow the battery with both a long endurance time and high fast-charge performance.

In some embodiments, a thickness of the silicon layer is 100 to 200 nm. With the thickness falling within the above range, space is reserved for silicon to expand in the pore channels, and the conductivity of the negative active material is improved.

In some embodiments, the functional layer includes at least one functional sublayer, and each functional sublayer is made of a material that includes any one of carbon, phosphorus, tin, or germanium. In this way, the silicon layer and each functional sublayer are distributed in a sandwich layout, thereby enhancing the electron transport performance in the pores and improving the kinetics.

In some embodiments, the functional layer includes a first carbon layer, a phosphorus layer, a tin layer, and a second carbon layer stacked in sequence from the interior of the pore channels outward. In this way, the tin layer can greatly improve the lithium-ion migration kinetics. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, increases the solid phase diffusion speed, and improves the kinetics. In addition, the tin can alleviate the growth of silicon clusters in SiO. The lithiation potential of phosphorus in the phosphorus layer is 0.9 V, much higher than 0.4 V, a lithiation potential of silicon. Therefore, the negative electrode lithium plating potential can be increased by being doped with phosphorus. In addition, P can also improve the fast-charge performance. The first carbon layer is used for conductive network contact, and can enhance the electron transport performance in the pores and improve the stability of an interface between the material and the electrolyte solution. The second carbon layer improves the conductivity of the entire negative active material, improves the stability of the interface between the material and the electrolyte solution, and improves the kinetics of the battery.

In some embodiments, a thickness of the first carbon layer is 20 to 40 nm; and/or, a thickness of the phosphorus layer is 20 to 40 nm; and/or, a thickness of the tin layer is 20 to 40 nm; and/or, a thickness of the second carbon layer is 20 to 40 nm. The deposition morphology of each of the above layers is a nanolayer, thereby alleviating the problem of low kinetics of high-silicon products, improving the power performance of the electrode, and endowing the battery with both a long endurance time and high fast-charge performance.

A second aspect of this application provides a method for preparing the negative active material disclosed in the above embodiment. The method includes the following steps:

S10. Mixing biomass, sodium hydroxide, and zinc hydroxide, and calcining the mixture to obtain a porous carbon, where a surface of the porous carbon is provided with pore channels communicating to the interior of the porous carbon.

In this step, the biomass is carbonized and forms pores under the activation of sodium hydroxide and zinc hydroxide to obtain porous carbon. The biomass may be straw, sisal fiber, coconut shell, or the like. This application does not limit the type of the biomass. The calcination conditions are not limited herein. In some embodiments of this application, the calcination temperature is 1800 °C and the calcination time is 12 hours, so that the resultant porous carbon is more homogeneous and leaves space for the expansion of silicon.

S20. Depositing a silicon layer and a functional layer in the pore channels in sequence from an interior of the pore channels outward to obtain a negative active material.

In some embodiments, step S20 includes: depositing a silicon layer, a first carbon layer, a phosphorus layer, a tin layer, and a second carbon layer in sequence in the pore channels of the porous carbon from the interior of the pore channels outward.

The prepared functional layer includes a first carbon layer, a phosphorus layer, a tin layer, and a second carbon layer stacked in sequence from inside outward. In this way, the tin layer can greatly improve the lithium-ion migration kinetics. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, increases the solid phase diffusion speed, and improves the kinetics. In addition, the tin can alleviate the growth of silicon clusters in SiO. The lithiation potential of phosphorus in the phosphorus layer is 0.9 V, much higher than 0.4 V, a lithiation potential of silicon. Therefore, the negative electrode lithium plating potential can be increased by being doped with phosphorus. In addition, P can also improve the fast-charge performance. The first carbon layer is used for conductive network contact, and can enhance the electron transport performance in the pores and improve the stability of an interface between the material and the electrolyte solution. The second carbon layer improves the conductivity of the entire negative active material, improves the stability of the interface between the material and the electrolyte solution, and improves the kinetics of the battery.

In some embodiments, a deposition temperature of the silicon layer is 1200 °C to 1700 °C. If the temperature is low, silicon carbide is prone to be formed, thereby causing a loss of capacity. Therefore, in an environment with a high temperature of 1200 °C to 1700 °C, the silicon layer is easily formed. The deposition temperature of the phosphorus layer is 500 °C to 700 °C, a deposition temperature of the tin layer is 500 °C to 700 °C, the deposition temperature of the second carbon layer is 800 °C to 1000 °C, and a deposition time is 2 to 4 hours. The above deposition conditions are conducive to the formation of the silicon layer and the functional layer that assume a sandwich layout, and improve the kinetics of the battery.

In some embodiments, the deposition time of the tin layer and the phosphorus layer is 6 hours, so as to obtain a hierarchically deposited composite material. In addition, the deposition may be performed in a plurality of rounds based on the pore filling rate (the pore utilization rate falls within the range of 30% to 70%). The remaining pores leave space for expansion.

In some embodiments, each layer may be deposited by gas phase deposition, solid phase deposition, or the like. The deposition manner is not limited herein. During gas phase deposition, the first carbon layer and the second carbon layer may be deposited by the following method: performing gas phase deposition for a combination of one or more of methane, ethylene, or acetylene at 800 °C to 1000 °C, keeping the temperature for 2 to 4 hours, and then turning off the gas source to cool down to obtain a first carbon layer or a second carbon layer.

The tin layer or phosphorus layer is deposited by: vapor-depositing SnO or phosphorus pentoxide at 500 °C to 700 °C, and keeping the temperature for 6 hours.

In some embodiments, after the functional layer is deposited, the functional layer is finally coated with a carbon layer by means of a solid phase method, a gas phase method, or another method, so as to improve the stability of the interface between the material and the electrolyte solution.

According to a third aspect, this application provides a negative electrode plate. The negative electrode plate includes the negative active material disclosed in the above embodiment.

According to a fourth aspect, this application provides a secondary battery. The secondary battery includes the positive electrode plate disclosed in the above embodiment.

According to a fifth aspect, this application provides an electrical device. The electrical device includes the secondary battery disclosed in the above embodiment.

### BRIEF DESCRIPTION OF DRAWINGS

To describe the technical solutions in the embodiments of the present invention or in the prior art more clearly, the following outlines the drawings to be used in the description of the embodiments of the present invention or the prior art. Evidently, the drawings outlined below are merely some embodiments of the present invention, and a person of ordinary skill in the art may derive other relevant drawings from the drawings without making any creative efforts.

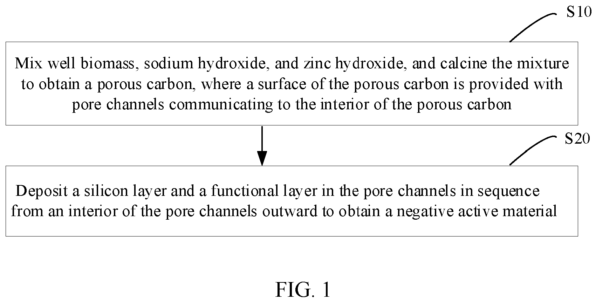

FIG. 1 is a schematic flowchart of a method for preparing a negative active material according to an embodiment of this application.

The objective fulfillment, functional characteristics, and advantages of the present invention are described below in more detail with reference to the drawings.

### DETAILED DESCRIPTION OF EMBODIMENTS

To make the objectives, technical solutions, and advantages of some embodiments of the present invention clearer, the following describes the technical solutions of some embodiments of the present invention clearly in detail. Unless conditions are otherwise specified in the embodiments, conventional conditions or conditions recommended by the manufacturer apply. A reagent or instrument used herein without specifying the manufacturer is a conventional product that is commercially available from the market.

It is hereby noted that, unless conditions are otherwise specified in the embodiments, conventional conditions or conditions recommended by the manufacturer apply. A reagent or instrument used herein without specifying the manufacturer is a conventional product that is commercially available from the market. In addition, the term "and/or" used herein means three parallel solutions. For example, "A and/or B" means A, or B, or both A and B. In addition, the technical solutions of different embodiments may be combined with each other to the extent practicable by a person of ordinary skilled in the art. When a combination of technical solutions is contradictory or impracticable, the combination of technical solutions is considered to be nonexistent and fall outside the protection scope claimed by the present invention. All other embodiments derived by a person of ordinary skill in the art based on the embodiments of this application without making any creative efforts fall within the protection scope of this application.

Currently, the lithium battery industry is developing rapidly. A negative active material is an important integral part of a lithium-ion battery. Preparing a positive electrode material of high safety performance, a high specific capacity, and stable cycle performance is of great significance to the development and application of lithium-ion batteries. To further increase an energy density and reduce cost, negative electrode materials are developing toward a silicon-carbon composite material.

A silicon-carbon composite material is a recently popular type of negative active material. Silicon offers the advantages such as an ultra-high theoretical lithiation capacity that is approximately ten times that of a carbon material, a charge-discharge plateau similar to that of graphite, low cost, and abundant source. However, in the silicon-carbon composite material, a pure hard carbon skeleton is difficult to compact. The compaction density of pure hard carbon is as low as 1.2 g/CC, thereby limiting the increase of the volumetric energy density of batteries. In addition, deposited silicon in the material does not fill interstices, thereby resulting in low electronic conductivity. Carbon pores in the material lead to relatively low C-rate performance of the material, and impair the kinetic performance of the batteries.

In response to the above defects, the applicant, after a lot of creative work, discloses a negative active material. By disposing silicon in pore channels of porous carbon and overlaying the silicon with a functional layer, this application overcomes the disadvantages of existing silicon-carbon materials and reserves space for the expansion of silicon.

Specifically, the negative active material disclosed herein includes: porous carbon, where a surface of the porous carbon is provided with pore channels communicating to an interior of the porous carbon; and, a deposit, settling in the pore channels and including a silicon layer and a functional layer deposited in sequence from an interior of the pore channels outward, where the functional layer is made of a material that includes at least one of carbon, phosphorus, tin, or germanium. Compared with existing technology, this application achieves at least the following beneficial effects:

Silicon is disposed in the pore channels of the porous carbon, and a functional layer is disposed to overlay the silicon. The carbon, phosphorus, tin, and germanium can greatly improve the transfer kinetics of lithium ions. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, accelerates diffusion of lithium ions, increases the solid-phase diffusion speed, and enhances the kinetics. With the functional layer disposed, and with silicon disposed in the pore channels of the porous carbon, the negative active material disclosed herein reserves space for expansion of silicon, thereby lifting the lithium plating window, and improving the kinetics of the battery.

In some embodiments, the specific surface area (BET) of the porous carbon is 1000 to 2000 m²/g, for example, 1000 m²/g, 1100 m²/g, 1200 m²/g, 1300 m²/g, 1400 m²/g, 1500 m²/g, 1600 m²/g, 1700 m²/g, 1800 m²/g, 1900 m²/g, or the like; the pore diameter of the pore channels is 2 to 500 nm, for example, 2 nm, 10 nm, 100 nm, 200 nm, 250 nm, 300 nm, 400 nm, 500 nm, or the like; the particle diameter of the porous carbon is 2 to 8 µm, for example, 2 µm, 3 µm, 4 µm, 5 µm, 6 µm, 7 µm, 8 µm, or the like; and the volume of the deposit is 30% to 70%, for example, 30%, 40%, 50%, 60%, 70%, 80%, or the like of the volume of the pore channels. In this way, with the porous carbon used as a skeleton, space is reserved for silicon to expand. With the parameter values falling within the above ranges, the diffusion energy barrier of lithium ions is reduced, the kinetics are improved, the lithium plating potential is raised, the lithium plating window is lifted, and the kinetic performance is improved.

Understandably, among the above restrictive conditions about the specific surface area of the porous carbon, the particle diameter of the porous carbon, and the volume percent of the deposit in relation to the volume of the pore channels, only one condition is satisfied, or a plurality of the conditions are satisfied concurrently, without being limited herein. In an embodiment of this application, the above conditions are met at the same time, thereby further reducing the diffusion energy barrier of lithium ions, improving the kinetics, raising the lithium plating potential, lifting the lithium plating window, and improving the kinetic performance.

In some embodiments, a mass percent of silicon in the negative active material is 40% to 100%, for example, 40%, 50%, 60%, 70%, 80%, 90%, 100%, or the like. In this way, a high silicon content can be applied to battery products of 400 to 500 Wh/kg to alleviate the problem of low kinetics of high-silicon products, improve the power performance of the electrode, and endow the battery with both a long endurance time and high fast-charge performance.

In some embodiments, a thickness of the silicon layer is 100 to 200 nm, for example, 100 nm, 110 nm, 120 nm, 130 nm, 140 nm, 150 nm, 160 nm, 170 nm, 180 nm, 190 nm, 200 nm, or the like. Within the thickness falling within the above range, space is reserved for silicon to expand in the pore channels, and the conductivity of the negative active material is improved.

When the functional layer is made of a material that includes two or more of carbon, phosphorus, tin, or germanium, this application does not limit the layout of the constituents in the functional layer. Various constituents may be evenly mixed together to form a doped and homogeneous functional layer; or, each constituent may form one or more separate layers, and all the layers are stacked in sequence from inside outward. In this case, the layout of each layer is not limited either herein. All layouts fall within the scope of protection of this application. In some embodiments, the functional layer includes at least one functional sublayer. Each functional sublayer is made of a material that includes any one of carbon, phosphorus, tin, or germanium. In this way, the silicon layer and each functional sublayer are distributed in a sandwich layout, thereby enhancing the electron transport performance in the pores and improving the kinetics.

The tin can also alleviate the growth of silicon clusters in SiO. The lithiation potential of phosphorus is 0.9 V, much higher than 0.4 V, a lithiation potential of silicon. Therefore, the negative electrode lithium plating potential can be increased by being doped with phosphorus. In addition, P can also improve the fast-charge performance. The carbon can enhance the electron transport performance in the pores and improve the stability of the interface between the material and the electrolyte solution.

In some embodiments, the functional layer includes a first carbon layer, a phosphorus layer, a tin layer, and a second carbon layer stacked in sequence from the interior of the pore channels outward. In this way, the tin layer can greatly improve the lithium-ion migration kinetics. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, increases the solid phase diffusion speed, and improves the kinetics. In addition, the tin can alleviate the growth of silicon clusters in SiO. The lithiation potential of phosphorus in the phosphorus layer is 0.9 V, much higher than 0.4 V, a lithiation potential of silicon. Therefore, the negative electrode lithium plating potential can be increased by being doped with phosphorus. In addition, P can also improve the fast-charge performance. The first carbon layer is used for conductive network contact, and can enhance the electron transport performance in the pores and improve the stability of an interface between the material and the electrolyte solution. The second carbon layer improves the conductivity of the entire negative active material, improves the stability of the interface between the material and the electrolyte solution, and improves the kinetics of the battery.

In addition, the first carbon layer, phosphorus layer, tin layer, and second carbon layer stacked in sequence from inside outward are one unit. The functional layer may include a plurality of units stacked in sequence, as long as the volume of the deposit is 30% to 70% of the volume of the pore channels.

In some embodiments, the thickness of the first carbon layer is 20 to 40 nm, for example, 20 nm, 25 nm, 30 nm, 40 nm, or the like; the thickness of the phosphorus layer is 20 to 40 nm, for example, 20 nm, 25 nm, 30 nm, 40 nm, or the like; the thickness of the tin layer is 20 to 40 nm, for example, 20 nm, 25 nm, 30 nm, 40 nm, or the like; the thickness of the second carbon layer is 20 to 40 nm, for example, 20 nm, 25 nm, 30 nm, 40 nm, or the like. The deposition morphology of each of the above layers is a nanolayer, thereby alleviating the problem of low kinetics of high-silicon products, improving the power performance of the electrode, and endowing the battery with both a long endurance time and high fast-charge performance.

Similarly, among the restrictive conditions on the thicknesses of the first carbon layer, the phosphorus layer, the tin layer, and the second carbon layer, only one of the conditions is satisfied, or a plurality of the conditions are satisfied concurrently, without being limited herein. In an embodiment of this application, all the above conditions are met concurrently, thereby further alleviating the problem of low kinetics of high-silicon products, enhancing the power performance of the electrode, and endowing the battery with both a long endurance time and high fast-charge performance.

In some embodiments, tin may be replaced by germanium. That is, the functional layer includes a first carbon layer, a phosphorus layer, a germanium layer, and a second carbon layer stacked in sequence from inside outward. The thickness of the first carbon layer is 20 to 40 nm, for example, 20 nm, 25 nm, 30 nm, 40 nm, or the like; the thickness of the phosphorus layer is 20 to 40 nm, for example, 20 nm, 25 nm, 30 nm, 40 nm, or the like; the thickness of the germanium layer is 20 to 40 nm, for example, 20 nm, 25 nm, 30 nm, 40 nm, or the like; the thickness of the second carbon layer is 20 to 40 nm, for example, 20 nm, 25 nm, 30 nm, 40 nm, or the like. After replacement, the same effect can be achieved.

According to a second aspect, this application provides a method for preparing the negative active material disclosed in the above embodiment. Referring to FIG. 1, the method for preparing the negative active material includes the following steps:

S10. mixing well biomass, sodium hydroxide, and zinc hydroxide, and calcining the mixture to obtain a porous carbon, where a surface of the porous carbon is provided with pore channels communicating to the interior of the porous carbon.

In this step, the biomass is carbonized and forms pores under the activation of sodium hydroxide and zinc hydroxide to obtain porous carbon. The biomass may be straw, sisal fiber, coconut shell, or the like. This application does not limit the type of the biomass. The calcination conditions are not limited herein. In some embodiments of this application, the calcination temperature is 1800 °C and the calcination time is 12 hours, so that the resultant porous carbon is more homogeneous and leaves space for the expansion of silicon.

S20. depositing a silicon layer and a functional layer in the pore channels in sequence from an interior of the pore channels outward to obtain a negative active material.

In some embodiments, step S20 includes: depositing a silicon layer, a first carbon layer, a phosphorus layer, a tin layer, and a second carbon layer in sequence in the pore channels of the porous carbon from the interior of the pore channels outward.

The prepared functional layer includes a first carbon layer, a phosphorus layer, a tin layer, and a second carbon layer stacked in sequence from inside outward. In this way, the tin layer can greatly improve the lithium-ion migration kinetics. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, increases the solid phase diffusion speed, and improves the kinetics. In addition, the tin can alleviate the growth of silicon clusters in SiO. The lithiation potential of phosphorus in the phosphorus layer is 0.9 V, much higher than 0.4 V, a lithiation potential of silicon. Therefore, the negative electrode lithium plating potential can be increased by being doped with phosphorus. In addition, P can also improve the fast-charge performance. The first carbon layer is used for conductive network contact, and can enhance the electron transport performance in the pores and improve the stability of an interface between the material and the electrolyte solution. The second carbon layer improves the conductivity of the entire negative active material, improves the stability of the interface between the material and the electrolyte solution, and improves the kinetics of the battery.

In some embodiments, a deposition temperature of the silicon layer is 1200 °C to 1700 °C, for example, 1200 °C, 1300 °C, 1400 °C, 1500 °C, 1600 °C, 1700 °C, or the like. If the temperature is low, silicon carbide is prone to be formed, thereby causing a loss of capacity. Therefore, in an environment with a high temperature of 1200 °C to 1700 °C, the silicon layer is easily formed. The deposition temperature of the phosphorus layer is 500 °C to 700 °C, for example, 500 °C, 550 °C, 600 °C, 650 °C, 700 °C, or the like. The deposition temperature of the tin layer is 500 °C to 700 °C, for example, 500 °C, 550 °C, 600 °C, 650 °C, 700 °C, or the like. The deposition temperature of the second carbon layer is 800 °C to 1000 °C, for example, 800 °C, 850 °C, 900 °C, 950 °C, 1000 °C, or the like. The deposition time is 2 to 4 hours, for example, 2, hours, 3 hours, 4 hours, or the like. The above deposition conditions are conducive to the formation of the silicon layer and the functional layer that assume a sandwich layout, and improve the kinetics of the battery.

Understandably, among the above restrictive conditions about the deposition temperature of each layer, only one condition is satisfied, or a plurality of the conditions are satisfied concurrently, without being limited herein. In an embodiment of this application, the above conditions are met at the same time, thereby further reducing the diffusion energy barrier of lithium ions, improving the kinetics, raising the lithium plating potential, lifting the lithium plating window, and improving the kinetic performance.

In some embodiments, the deposition time of the tin layer and the phosphorus layer is 6 hours, so as to obtain a hierarchically deposited composite material. In addition, the deposition may be performed in a plurality of rounds based on the pore filling rate (the pore utilization rate falls within the range of 30% to 70%). The remaining pores leave space for expansion.

In some embodiments, each layer may be deposited by gas phase deposition, solid phase deposition, or the like. The deposition manner is not limited herein. During gas phase deposition, the first carbon layer and the second carbon layer may be deposited by the following method: performing gas phase deposition for a combination of one or more of methane, ethylene, or acetylene at 800 °C to 1000 °C, keeping the temperature for 2 to 4 hours, and then turning off the gas source to cool down to obtain a first carbon layer or a second carbon layer. The carbon layers are soft carbon, exhibit a low and steady charge-discharge potential plateau, and offer advantages such as a large charge-discharge capacity, high efficiency, and good cycle performance.

The tin layer or phosphorus layer is deposited by the following method: vapor-depositing SnO or phosphorus pentoxide at 500 °C to 700 °C under protection of argon, and keeping the temperature for 6 hours. At high temperature, the porous carbon is used as a reducing agent to reduce the SnO or phosphorus pentoxide to tin or phosphorus respectively, thereby implementing deposition.

In some embodiments, after the functional layer is deposited, the functional layer is finally coated with a carbon layer by means of a solid phase method, a gas phase method, or another method, so as to improve the stability of the interface between the material and the electrolyte solution.

According to a third aspect, this application provides a negative electrode plate. The negative electrode plate includes the negative active material disclosed in the above embodiment.

As an example, the negative electrode plate includes a current collector and a negative electrode coating. The types of the current collector include copper foil and other commonly used negative current collectors. The negative electrode coating includes a negative active material, a binder, and a conductive agent. The binder includes, but is not limited to, at least one of polyvinylidene fluoride, a vinylidene fluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, polyhexafluoropropylene, or styrene-butadiene rubber. The mass percent of the binder is 0.5% to 3%. The conductive agent includes, but is not limited to, at least one of carbon black (SP), carbon nanotubes (CNT), or graphene. To increase the conductivity of the positive electrode plate, the mass percent of the conductive agent falls within the range of 0.8% to 4%. The types of the separator include a polyethylene (PE) separator and a polypropylene (PP) separator. The electrolyte solution includes at least two of dimethyl carbonate (DMC), ethyl methyl carbonate (EMC), diethyl carbonate (DEC), ethylene carbonate (EC), propylene carbonate (PC), or propyl propionate (PP). Further, the electrolyte solution may additionally include at least one of the following as an electrolyte additive: vinylene carbonate (VC), fluoroethylene carbonate (FEC), and a dinitrile compound. The dinitrile compound includes succinonitrile (SN).

The negative electrode plate disclosed herein achieves all the beneficial effects of the negative active material, the details of which are omitted here.

According to a fourth aspect, this application provides a secondary battery. The secondary battery includes the negative electrode plate disclosed in the above embodiment.

A lithium-ion battery is used as an example of the secondary battery disclosed herein. The lithium-ion battery includes the negative electrode plate disclosed in the third aspect of this application, a positive electrode plate, a separator, and an electrolyte solution.

As an example, the positive electrode plate includes a current collector and a positive electrode coating disposed on at least one surface of the current collector. The current collector includes two surfaces opposite to each other in a thickness direction of the current collector. The positive electrode coating is disposed on either or both of the two opposite surfaces of the current collector. The types of the current collector include aluminum foil and other commonly used positive current collectors.

The positive electrode coating includes a positive active material, a binder, and a conductive agent. The positive active material includes the positive electrode material disclosed in an embodiment in the first aspect of this application or a positive electrode material prepared by the method disclosed in an embodiment in the second aspect of this application. The binder includes, but is not limited to, at least one of polyvinylidene fluoride, a vinylidene fluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, polyhexafluoropropylene, or styrene-butadiene rubber. The mass percent of the binder is 0.5% to 3%. The conductive agent includes, but is not limited to, at least one of carbon black (SP), carbon nanotubes (CNT), or graphene. To increase the conductivity of the positive electrode plate, the mass percent of the conductive agent falls within the range of 0.8% to 4%.

The negative electrode plate disclosed in the third aspect of this application, a positive electrode plate, and a separator are wound or stacked to form a bare cell, and then put into an external housing such as an aluminum laminated film, an aluminum shell, or a steel shell. The packaged bare cell is filled with an electrolyte solution and subjected to a series of processes such as chemical formation and sealing to produce a lithium-ion battery.

The secondary battery disclosed in this application includes the negative electrode plate disclosed in the above embodiment. The negative electrode plate includes the negative active material disclosed in the preceding embodiment. Therefore, the secondary battery achieves all the beneficial effects of the negative active material, the details of which are omitted here.

The battery module includes at least one secondary battery. A person skilled in the art may adaptively select the specific number of the secondary batteries based on the use and capacity of the battery module.

In addition, when there are at least two secondary batteries in a battery module, the at least two secondary batteries may be arranged in sequence along the length direction of the battery module. Alternatively, the secondary batteries may be arranged in any other manner, without being limited herein.

The battery module disclosed in this application includes the positive electrode material described above, and achieves all the beneficial effects of the positive electrode material, the details of which are omitted here.

The battery pack includes at least one battery module. A person skilled in the art may adaptively select the specific number of battery modules in a battery pack based on the use and capacity of the battery pack.

The battery pack disclosed in this application includes the positive electrode material described above, and achieves all the beneficial effects of the positive electrode material, the details of which are omitted here.

According to a fifth aspect, this application provides an electrical device. The electrical device includes the secondary battery disclosed in the above embodiment.

The secondary battery may be used as a power supply of the electrical device, or used as an energy storage unit of the electrical device. The electrical devices may include, but are not limited to, a mobile device (such as a mobile phone, a tablet computer, and an e-book), an electric vehicle (such as a battery electric vehicle, a hybrid electric vehicle, a plug-in hybrid electric vehicle, an electric bicycle, an electric bus, and an electric truck), a watercraft, a satellite system, and an energy storage system.

The electrical device disclosed in this application includes the positive electrode material described above, and achieves all the beneficial effects of the positive electrode material, the details of which are omitted here.

The technical solutions of the present invention are described in more detail below with reference to specific embodiments and drawings. Understandably, the following embodiments are merely intended to explain the present invention but not to limit the present invention.

The parameters of the negative active material of Embodiments 1 to 17 are set out in Table 1 below.

**Table 1 Parameters of the negative active materials in Embodiments 1 to 17 (To be continued)**

| Serial number | BET of porous carbon (m²/g) | Pore diameter of pore channel (nm) | Particle diameter of porous carbon (µm) | Volume percent of deposit (%) | Mass percent of silicon (%) |
|---|---|---|---|---|---|
| Embodiment 1 | 1500 | 2 | 5 | 50 | 96.8 |
| Embodiment 2 | 1500 | 2 | 5 | 50 | 50 |
| Embodiment 3 | 1500 | 2 | 5 | 50 | 100 |
| Embodiment 4 | 1000 | 2 | 5 | 50 | 96.8 |
| Embodiment 5 | 2000 | 2 | 5 | 50 | 96.8 |
| Embodiment 6 | 1500 | 2 | 5 | 50 | 96.8 |
| Embodiment 7 | 1500 | 50 | 5 | 50 | 61.6 |
| Embodiment 8 | 1500 | 2 | 2 | 50 | 96.8 |
| Embodiment 9 | 1500 | 2 | 8 | 50 | 96.8 |
| Embodiment 10 | 1500 | 2 | 5 | 30 | 96.8 |
| Embodiment 11 | 1500 | 2 | 5 | 70 | 96.8 |
| Embodiment 12 | 1500 | 2 | 5 | 50 | 96.8 |
| Embodiment 13 | 1500 | 2 | 5 | 50 | 96.8 |
| Embodiment 14 | 1500 | 2 | 5 | 50 | 96.8 |
| Embodiment 15 | 1500 | 2 | 5 | 50 | 96.8 |
| Embodiment 16 | 1500 | 2 | 5 | 50 | 96.8 |
| Embodiment 17 | 1500 | 2 | 5 | 50 | 96.8 |
| Comparative Embodiment 1 | 1500 | 2 | 5 | 50 | 96.8 |

**Table 1 Parameters of the negative active materials in Embodiments 1 to 17 (Continued)**

| Serial number | Thickness of silicon layer (nm) | Thickness of first carbon layer (nm) | Thickness of phosphorus layer (nm) | Thickness of tin layer (nm) | Thickness of second carbon layer (nm) |
|---|---|---|---|---|---|
| Embodiment 1 | 150 | 30 | 30 | 30 | 30 |
| Embodiment 2 | 150 | 30 | 30 | 30 | 30 |
| Embodiment 3 | 150 | 30 | 30 | 30 | 30 |
| Embodiment 4 | 150 | 30 | 30 | 30 | 30 |
| Embodiment 5 | 150 | 30 | 30 | 30 | 30 |
| Embodiment 6 | 150 | 30 | 30 | 30 | 30 |
| Embodiment 7 | 150 | 30 | 30 | 30 | 30 |
| Embodiment 8 | 150 | 30 | 30 | 30 | 30 |
| Embodiment 9 | 150 | 30 | 30 | 30 | 30 |
| Embodiment 10 | 150 | 30 | 30 | 30 | 30 |
| Embodiment 11 | 150 | 30 | 30 | 30 | 30 |
| Embodiment 12 | 100 | 30 | 30 | 30 | 30 |
| Embodiment 13 | 200 | 30 | 30 | 30 | 30 |
| Embodiment 14 | 150 | 20 | 20 | 20 | 20 |
| Embodiment 15 | 150 | 40 | 40 | 40 | 40 |
| Embodiment 16 | 150 | 30 | 30 | 30 for germanium layer | 30 |
| Embodiment 17 | 150 | 0 | 30 | 30 | 30 |
| Comparative Embodiment 1 | 1500 | \ | \ | \ | \ |

The negative active materials in Embodiments 1 to 17 are prepared by the following method:
(1) Mixing well straw, sodium hydroxide, and zinc hydroxide, and calcining the mixture in an argon atmosphere at a calcination temperature of 1800 °C for 12 hours to obtain porous carbon, where a surface of the porous carbon is provided with pore channels communicating to the interior of the porous carbon.
(2) Depositing a silicon layer, a first carbon layer, a phosphorus layer, a tin (or germanium) layer, and a second carbon layer in sequence in the pore channels of the porous carbon to obtain a negative active material.

The negative active material in Comparative Embodiment 1 is prepared by the following steps:
(1) Calcining straw in an argon atmosphere at a calcination temperature of 1800 °C for 12 hours to obtain carbon; and
(2) Mixing the carbon with silicon to obtain a negative active material that assumes a core-shell structure in which the carbon is coated with silicon.

The negative active materials in Embodiments 1 to 17 and Comparative Embodiment 1 are applied to preparation of batteries by the following steps:
(1) Applying a positive electrode slurry onto 10 µm-thick aluminum foil, and pressing the foil into a sheet to obtain a positive electrode plate of 400 µm in thickness. The positive electrode slurry is a mixture of NCM98, SP, SWCNT, and PVDF mixed at a ratio of 96%: 2%: 0.6%: 0.2%: 1.2%. The viscosity of the slurry is 7500 mPa·s. The solid content of the slurry is 68%, NCM98 is Li[NiₓCo_{y}Mn_{1-x-y}]O₂, where x > 0.5. SP stands for Super P, and is a conductive carbon black prepared by a furnace process (modified furnace black method (MMM)). The SP is formed by processes such as soft agglomeration and artificial compression of a primary aggregate (a secondary structure) of 150 to 200 nm in diameter after the primary aggregate is formed from primary particles (a primary structure) of approximately 40 nm in diameter by agglomeration. The SP on the whole is in the shape of a grape ball chain. The SWCNT stands for single-walled carbon nanotubes, and the PVDF stands for polyvinylidene difluoride.
(2) Applying the negative electrode slurry onto 4.5 µm-thick copper foil until the coating thickness reaches 125 µm, and pressing the slurry into a sheet to obtain a negative electrode plate of 110 µm in thickness. The negative electrode slurry is a mixture of the negative active material prepared in the corresponding embodiment, SP, SWCNT, PAALi mixed at a ratio of 96.8%: 1.04%: 0.06%: 2.1% (the gravimetric capacity of the mixture of silicon subdioxide, graphite, and silica micropowder is 1250 mAh/g).
(3) Assembling a composite lithium foil-based negative electrode plate, a positive electrode plate, a separator Celgard 7+4, and an electrolyte solution (Guotai Huarong 8950FB) to form a pouch cell, and leaving the pouch cell to stand at a 45 °C high temperature for 24 hours.
(4) After completion of high-temperature standing, performing chemical formation and capacity grading, and recording the first-cycle Coulombic efficiency and the mid-point voltage. The specific steps of the chemical formation and capacity grading are as follows:
   Leaving the pouch cell that has completed standing at high temperature to stand statically for a duration of t₁, and then charging the pouch cell at a constant current of 0.02C until the voltage reaches U₁, discharging the pouch cell at a constant current of 0.1C until the voltage drops to U₂, charging the pouch cell at a constant voltage of U₂ until the current drops to 0.02C, leaving the pouch cell to stand for a duration of t₂, discharging the pouch cell at a constant current of 0.1C until the voltage drops to U₃, reducing pressure, evacuating air, and sealing the pouch cell, thereby completing the chemical formation and capacity grading, where t₁ is 12 h, U₁ is 3.5 V, U₂ is 4.6 V, U₃ is 2.5 V, and t₂ is 3 min.
(5) Performing 0.5C cycling after the chemical formation and capacity grading.

Measuring the expansion resistance performance, charge capacity, cycle performance, energy density, and C-rate performance of the resultant negative active material, and recording the results in Table 1.

### Test methods

### Expansion resistance performance

Measuring the thickness of an electrode plate of the cell before the cell undergoes chemical formation, and the recording the thickness as L₀.

Measuring the thickness of the electrode plate of the cell that has been chemically formed and fully charged, and recording the thickness as L₁.

Calculating the expansion rebound rate as: expansion rebound rate = (L₁ - L₀)/L₀ × 100%.

### Calculation of the charging time

Determining a widest lithium plating window by applying a test current at intervals from 0%SoC to 100%, where each interval is 5%SoC. Fitting a lithium plating window curve. Finally, calculating the charging time spent in charging the cell from 10%SoC to 70%SoC based on a maximum charge capacity in each SoC interval.

### Test of energy density

After completion of high-temperature standing, performing chemical formation and capacity grading, and recording the first-cycle Coulombic efficiency and the mid-point voltage. The specific steps of chemical formation and capacity grading are as follows: Leaving the cell that has completed standing at high temperature to stand statically for 12 hours, and then charging the cell at a constant current of 0.02C until the voltage reaches 3.75 V, discharging the cell at a constant current of 0.1C until the voltage drops to 4.3 V, charging the cell at a constant voltage of 4.3 V until the current drops to 0.02C, leaving the cell to stand for 3 minutes, discharging the cell at a constant current of 0.1C until the voltage drops to 2.5 V, reducing pressure, evacuating air, and sealing the cell, thereby completing the chemical formation and capacity grading. Recording the discharge energy.

### Test of C-rate performance (2C discharge capacity retention rate)

Charging the cell at 25 °C at a constant current of 0.33C until the voltage reaches 4.3 V, and then charging the cell at a constant voltage until the current drops to 0.02C. Leaving the cell to stand for 5 minutes, and then discharging the cell at different current rates such as 2C until the voltage drops to 2.5 V separately. Recording the discharge capacities of the cell discharged at such different rates. Calculating the ratios of the discharge capacities obtained at different current rates to the discharge capacity obtained at a rate of 0.33C.

### Test of cycle performance

Cycling a chemically formed and graded cell according to the following procedure: Charging the cell at a constant current of 0.33C until the voltage reaches 4.25 V, and then charging the cell at a constant voltage until the current drops to 0.05C. Leaving the cell to stand for 5 minutes, and then discharging the cell at 1C until the voltage drops to 2.7 V, and leaving the cell to stand for 5 minutes. Repeating the above process until the capacity retention rate is less than or equal to 80%.

**Table 2 Performance test of negative active material**

| | Expansion resistance performance | Charging time (min) | Cycle performance (cls) | Energy density (Wh/kg) | 2C discharge capacity retention rate |
|---|---|---|---|---|---|
| Embodiment 1 | 35% | 7 | 1200 | 479 | 70% |
| Embodiment 2 | 48% | 8 | 1100 | 468 | 66% |
| Embodiment 3 | 58% | 9 | 1000 | 460 | 60% |
| Embodiment 4 | 67% | 11 | 800 | 452 | 52% |
| Embodiment 5 | 76% | 14 | 620 | 443 | 43% |
| Embodiment 6 | 84% | 17 | 510 | 421 | 38% |
| Embodiment 7 | 90% | 20 | 470 | 412 | 35% |
| Embodiment 8 | 86% | 19 | 500 | 416 | 37% |
| Embodiment 9 | 80% | 17 | 528 | 421 | 42% |
| Embodiment 10 | 72% | 16 | 542 | 425 | 47% |
| Embodiment 11 | 66% | 14 | 568 | 429 | 52% |
| Embodiment 12 | 60% | 12 | 589 | 436 | 56% |
| Embodiment 13 | 52% | 11 | 599 | 438 | 60% |
| Embodiment 14 | 48% | 10 | 623 | 441 | 62% |
| Embodiment 15 | 46% | 9.5 | 646 | 445 | 63% |
| Embodiment 16 | 43% | 9 | 688 | 448 | 65% |
| Embodiment 17 | 38% | 8 | 725 | 452 | 66% |
| Comparative Embodiment 1 | 110% | 28 | 400 | 400 | 25% |

As can be seen from comparison of the data of the embodiments and the comparative embodiments in Table 1, all the negative active materials and batteries prepared in Embodiments 1 to 17 are excellent in expansion resistance, lithium plating suppression, cycle performance, energy density, and C-rate performance. Therefore, by using the negative active material of the embodiments of this application, space is reserved for the expansion of silicon, so that the lithium plating window is lifted and the kinetics of the battery are improved to a relatively great extent. By contrast, in Comparative Embodiment 1, only a core-shell structured silicon-carbon negative active material is used, and various performance metrics are lower than those of the embodiments of this application. As can be seen, this application disposes silicon in the pore channels of porous carbon, and overlays the silicon with a functional layer, thereby improving the kinetic performance of the battery.

To sum up, in this application, silicon is disposed in the pore channels of the porous carbon, and a functional layer is disposed to overlay the silicon. The carbon, phosphorus, tin, and germanium can greatly improve the transfer kinetics of lithium ions. The lithium-ion diffusion coefficient of tin is 10⁻⁸ cm²/S. Compared with silicon with a lithium-ion diffusion coefficient of 10⁻¹¹ cm²/S, the tin reduces the migration barrier of lithium in silicon, accelerates diffusion of lithium ions, increases the solid-phase diffusion speed, and enhances the kinetics. With the functional layer disposed, and with silicon disposed in the pore channels of the porous carbon, the negative active material disclosed herein reserves space for expansion of silicon, thereby lifting the lithium plating window, and improving the kinetics of the battery.

What is described above is merely exemplary embodiments of the present invention, but is not intended to limit the patent scope of the present invention. To a person skilled in the art, various modifications and variations may be made to the present invention. Any and all modifications, equivalent replacements, improvements, and the like made without departing from the essence and principles of the present invention still fall within the patent protection scope of the present invention.

## Claims

1. A negative active material, **characterized in that** the negative active material comprises:
porous carbon, wherein a surface of the porous carbon is provided with pore channels communicating to an interior of the porous carbon; and
a deposit, settling in the pore channels and comprising a silicon layer and a functional layer deposited in sequence from an interior of the pore channels outward, wherein the functional layer is made of a material that comprises at least one of carbon, phosphorus, tin, or germanium.

2. The negative active material according to claim 1, **characterized in that** a specific surface area of the porous carbon is 1000 to 2000 m²/g; and/or
a pore diameter of the pore channels is 2 to 500 nm; and/or
a particle diameter of the porous carbon is 2 to 8 µm; and/or
a volume of the deposit is 30% to 70% of a volume of the pore channels.

3. The negative active material according to claim 1, **characterized in that** a mass percent of silicon in the negative active material is 40% to 100%.

4. The negative active material according to claim 1, **characterized in that** a thickness of the silicon layer is 100 to 200 nm; and/or
the functional layer comprises at least one functional sublayer, and each functional sublayer is made of a material that comprises any one of carbon, phosphorus, tin, or germanium.

5. The negative active material according to claim 1, **characterized in that** the functional layer comprises a first carbon layer, a phosphorus layer, a tin layer, and a second carbon layer stacked in sequence from the interior of the pore channels outward.

6. The negative active material according to claim 5, **characterized in that** a thickness of the first carbon layer is 20 to 40 nm; and/or
a thickness of the phosphorus layer is 20 to 40 nm; and/or
a thickness of the tin layer is 20 to 40 nm; and/or
a thickness of the second carbon layer is 20 to 40 nm.

7. A method for preparing the negative active material according to any one of claims 1 to 6, **characterized in that** the method comprises the following steps:
S10. mixing biomass, sodium hydroxide, and zinc hydroxide, and calcining the mixture to obtain a porous carbon, wherein a surface of the porous carbon is provided with pore channels communicating to the interior of the porous carbon; and
S20. depositing a silicon layer and a functional layer in the pore channels in sequence from an interior of the pore channels outward to obtain a negative active material.

8. The method for preparing a negative active material according to claim 6, **characterized in that** step S20 comprises:
depositing a silicon layer, a first carbon layer, a phosphorus layer, a tin layer, and a second carbon layer in sequence in the pore channels of the porous carbon from the interior of the pore channels outward.

9. The method for preparing the negative active material according to claim 8, **characterized in that** a deposition temperature of the silicon layer is 1200 °C to 1700 °C; and/or
a deposition temperature of the phosphorus layer is 500 °C to 700 °C; and/or
a deposition temperature of the tin layer is 500 °C to 700 °C; and/or
a deposition temperature of the second carbon layer is 800 °C to 1000 °C, and a deposition time is 2 to 4 hours.

10. A negative electrode plate, **characterized in that** the negative electrode plate comprises the negative active material according to any one of claims 1 to 6.

11. A secondary battery, **characterized in that** the secondary battery comprises the negative electrode plate according to claim 10.

12. An electrical device, **characterized in that** the electrical device comprises the secondary battery according to claim 11.
